(19) Europäisches Patentamt
European Patent Office
Office européen des brevets

(11) **EP 1 938 062 B1**

(12) **FASCICULE DE BREVET EUROPEEN**

(45) Date de publication et mention de la délivrance du brevet:
**22.08.2018 Bulletin 2018/34**

(51) Int Cl.:
***G01J 3/443*** *(2006.01)*   ***G01N 21/71*** *(2006.01)*

(21) Numéro de dépôt: **06820258.9**

(22) Date de dépôt: **05.10.2006**

(86) Numéro de dépôt international:
**PCT/FR2006/050995**

(87) Numéro de publication internationale:
**WO 2007/045782 (26.04.2007 Gazette 2007/17)**

(54) **PROCEDE D'ANALYSE QUALITATIVE ET QUANTITATIVE PAR SPECTROSCOPE D'EMISSION OPTIQUE**

OPTISCHES, QUALITATIVES UND QUANTITATIVES VERFAHREN FÜR DIE STRAHLUNGSSPEKTROSKOPIE

OPTICAL EMISSION SPECTROSCOPY QUALITATIVE AND QUANTITATIVE ANALYSIS METHOD

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **17.10.2005 FR 0553145**

(43) Date de publication de la demande:
**02.07.2008 Bulletin 2008/27**

(73) Titulaire: **COMMISSARIAT A L'ENERGIE ATOMIQUE**
**75015 Paris (FR)**

(72) Inventeur: **FICHET, Pascal**
**F-78300 Poissy (FR)**

(74) Mandataire: **Ipside**
**29, rue de Lisbonne**
**75008 Paris (FR)**

(56) Documents cités:
**US-A1- 2005 024 638    US-B1- 6 753 957**

• **P.FICHET, D.MENUT, R.BRENNETOT, E.VORS, A.RIVOALLAN: "Analysis by laser-induced breakdown spectroscopy of complex solids, liquids, and powders with an echelle spectrometer" APPLIED OPTICS, vol. 42, no. 30, 20 octobre 2003 (2003-10-20), pages 6029-6035, XP002390604**

**Description**

La présente invention concerne un procédé d'analyse qualitative et quantitative de tout type d'échantillon mono ou multi élémentaires, à partir d'une base de données réalisée par spectroscopie d'émission optique sur des éléments purs en solution.

Il est connu, pour l'analyse de tout type de matériau, d'utiliser la spectroscopie d'émission optique sur plasma induit par laser. Cette technique d'analyse élémentaire est connue sous le nom de LIBS (Laser-Induced Breakdown Spectroscopy). Le principe est d'analyser les raies émises par un matériau à analyser en fonction de leur intensité. Cette analyse s'effectue généralement raie par raie, ce qui est relativement fastidieux. Lorsqu'on utilise un tel procédé sans disposer de bases de données spécifiques, on ne peut pas étudier la corrélation des différents éléments présents dans l'échantillon entre eux. En effet, les bases de données existantes, par exemple des bases de données telles que celles fournies par l'institut américain NIST (National Institute of Standards and Technology), contiennent des résultats enregistrés avec différents appareils de mesures et dans différentes configurations; on ne peut donc pas utiliser ces bases de données pour effectuer des comparaisons d'intensité entre plusieurs éléments, car les appareils de mesure n'ont pas tous la même influence sur les relevés effectués.

Par ailleurs, lorsqu'on veut utiliser un procédé de type LIBS pour de l'analyse quantitative, il peut être nécessaire de réaliser une courbe d'étalonnage avec l'appareil de détection utilisé, ceci afin de compenser une éventuelle influence de cet appareil sur les mesures obtenues. Les procédés connus d'obtention de ces courbes d'étalonnage sont généralement tels que les courbes dépendent de la matrice utilisée, à savoir une matrice liquide, solide ou gazeuse, et il faut donc les recalculer pour chaque matrice étudiée. Ainsi, si on réalise une courbe d'étalonnage sur des solutions, c'est-à-dire pour une matrice liquide, cette courbe n'est pas obligatoirement valable pour des mesures qui seraient effectuées sur des échantillons gazeux ou solides.

Des procédés s'affranchissant de ces effets de matrice ont été proposés, mais ces procédés sont basés sur des interprétations physiques des résultats sans prendre en compte les problèmes liés à l'expérimentation, tels que la saturation des spectres ou les analyses simultanées de traces et de majeurs.

Il est également connu de réaliser une base de données sur des solutions liquides et d'utiliser cette base de données pour l'analyse qualitative de tout type d'échantillon, mais non pour de l'analyse quantitative. Les documents P.FICHET et al: "Analysis by laser-induced breakdown spectroscopy of complex solids, liquids, and powders with an echelle spectrometer" APPLIED OPTICS, vol. 42, no. 30, 20 octobre 2003 (2003-10-20), pages 6029-6035, XP002390604, US 6 753 957 B1 et US 2005/024638A1 décrivent des procédés de l'art antérieur. L'invention concerne donc un procédé d'analyse qui remédie à au moins l'un de ces inconvénients.

L'invention concerne un procédé d'analyse qualitative et quantitative de tout type d'échantillon mono ou multi élémentaire par spectroscopie d'émission optique avec excitation par laser, utilisant une base de données réalisée sur des solutions aqueuses mono élémentaires ayant toutes la même concentration en élément pur, cette base de données contenant, pour chaque élément, les longueurs d'onde des raies d'émission et leur intensité respective, le procédé comportant les étapes suivantes :

- On calcule, à partir de la base de données, des coefficients inter éléments entre tous les éléments d'intérêts, c'est-à-dire susceptibles de se retrouver ensemble dans un échantillon, un coefficient inter éléments correspondant au rapport entre les intensités de deux raies de deux éléments différents. Un tel coefficient est représenté par la formule :

$$coefficient_{(i,j)}(\alpha/\beta) = \frac{I_i(\alpha)}{I_j(\beta)}$$

, où $I_i(\alpha)$ et $I_j(\beta)$ sont les intensités respectives de la raie $\alpha$ dans l'élément i et de la raie $\beta$ dans l'élément j, ces intensités étant issues de la base de données.

- Ensuite on effectue une analyse de l'échantillon par spectroscopie d'émission optique pour déterminer au moins une partie des différentes raies d'émission présentes ainsi que leurs intensités.
- Puis on détermine, à partir du spectre d'émission, les éléments présents dans l'échantillon, et
- finalement, on utilise les coefficients inter éléments et les intensités des raies détectées pour calculer de manière quantitative les concentrations respectives des différents éléments identifiés au préalable lors de l'analyse qualitative.

Ce calcul consiste à appliquer la formule suivante :

$$c_1 + \sum_i coefficient_{(1,i)}(\alpha_i/\beta_i) * \frac{J_i(\beta_i)}{J_1(\alpha_i)} * c_1 = 100 \quad,$$

dans laquelle $c_1$ représente la concentration en pourcentage massique d'un élément de l'échantillon choisi comme élément de référence, et les termes de la somme représentent les concentrations des autres éléments de l'échantillon, exprimées en fonction de la concentration $c_1$, des coefficients inter éléments et des intensités $J_i$ mesurées au cours de l'analyse de l'échantillon. Les coefficients inter éléments sont normalisés pour être utilisables les uns avec les autres. Dans cette formule, $J_i(\beta_i)$ et $J_1(\alpha_1)$ représentent les intensités respectives d'une raie quelconque $\beta_i$ dans l'élément i et d'une raie quelconque $\alpha_i$ dans l'élément 1, ces intensités étant mesurées au moment de l'analyse de l'échantillon, analyse au cours de laquelle sont détectées les raies.

La formule $c_1 + \sum_i coefficient_{(1,i)}(\alpha_i / \beta_i) * \dfrac{J_i(\beta_i)}{J_1(\alpha_i)} * c_1 = 100$ est équivalente à $\sum_i c_i = 100$, où $c_i$ est la concentration en pourcentage massique de l'élément i.

Cette concentration $c_i$ peut s'écrire en fonction de la concentration $c_1$ d'un élément prédéterminé, et en fonction des coefficients inter-éléments entre l'élément i et l'élément 1.

En effet, les coefficients inter-éléments sont tels que l'on a $\dfrac{J_1(\alpha_i)}{J_i(\beta_i)} = \dfrac{c_1}{c_i} * coefficient_{(1,i)}(\alpha_i / \beta_i)$.

Ainsi, $c_i = coefficient_{(1,i)}(\alpha_i / \beta_i) * \dfrac{J_i(\beta_i)}{J_1(\alpha_i)} * c_1$.

La base de données utilisée par l'invention est réalisée spécifiquement pour cette analyse. On utilise pour cela un procédé d'analyse par spectroscopie d'émission optique avec excitation par laser, c'est-à-dire qu'on utilise un faisceau laser pour produire un plasma, appelé aussi étincelle, sur un échantillon, qui est ici un élément pur en solution. Une fois transformé en plasma, l'élément émet un spectre lumineux composé de raies de différentes longueurs d'onde. L'analyse de ce spectre permet de connaître la constitution de l'élément. Lorsque les éléments purs ont été analysés, les longueurs d'onde des différentes raies d'émission ainsi que leur intensité sont stockées dans un fichier de données en format informatique, afin de constituer la base de données. Les données sont triées par ordre croissant ou décroissant d'intensités. On obtient alors des résultats tels que ceux présentés dans le tableau I ci-dessous.

Dans la colonne de gauche se trouvent les longueurs d'ondes des différentes raies du manganèse, et dans la colonne de droite se trouvent les intensités correspondantes. Ce tableau est trié par ordre d'intensité décroissante dans cet exemple.

Tableau I
Fichier des raies du Manganèse (Mn)

| Longeur d'onde (nm) | Intensité (ua) |
|---|---|
| 257,604 | 43274 |
| 294,914 | 36370 |
| 260,563 | 33743 |
| 259,369 | 29684 |
| 403,071 | 20694 |
| 403,301 | 17819 |
| 293,924 | 15594 |
| 293,297 | 14735 |
| 403,442 | 11490 |
| 344,194 | 10700 |
| 279,474 | 9749 |
| 347,425 | 7483 |
| 279,816 | 7057 |
| 262,565 | 6150 |
| 346,026 | 5792 |
| 404,127 | 5664 |
| 280,099 | 5027 |
| 356,949 | 4434 |
| 348,289 | 4362 |
| 380,671 | 3775 |

Les mesures présentées dans ce tableau sont réalisées sur des solutions mono-élémentaires ayant toute la même concentration.

Or, on sait qu'en spectroscopie d'émission, notamment de plasma, les raies d'amission peuvent être décrites par la formule $I_i = KC_iMe^{-E/kT}$ dans laquelle K est un facteur qui tient compte de la collection et des données spectroscopiques de la raie considérée, sous forme d'une fonction d'appareil, M est la quantité de masse ablatée et $e^{-E/kT}$ est représentatif de la température du plasma à l'équilibre thermodynamique.

Cette relation montre que l'émission optique est sensible aux effets de matrice, de par la prise en compte de la masse ablatée. Ainsi, le fait de créer la base de données à partir de solutions mono élémentaires de même concentration permet d'utiliser les coefficients pour n'importe quel type de matrice, en particulier pour une matrice solide.

Par ailleurs, le fait de réaliser cette base de données sur des solutions mono-élémentaires permet également de réaliser une base de données relativement complète, c'est à dire contenant un grand nombre d'informations. En effet, il est possible de disposer de solutions pour un grand nombre d'éléments chimiques, et ainsi d'effectuer des mesures pour tous ces éléments.

La base de données est fonction du matériel utilisé, notamment de la gamme spectrale et du temps de réponse de l'appareil de détection. Il faut donc veiller, lors de l'acquisition des données, à optimiser ce matériel et à utiliser un même appareil pour tous les éléments d'une base de données. Si on utilise des appareils différents, il faut pouvoir sur une solution aqueuse de même concentration reproduire des conditions expérimentales similaires (nature du laser, énergie, réponse du spectromètre) et obtenir un coefficient de passage, c'est-à-dire un facteur permettant de normaliser les mesures en fonction de l'appareil de détection utilisé.

Si les éléments purs n'ont pas tous la même concentration au moment de l'acquisition des données, il faut rapporter les valeurs observées à des valeurs correspondant à une concentration en élément pur fixée au départ, et identique pour tous les éléments. Le fait de prévoir cette concentration identique et de réaliser toutes les analyses sur des éléments situés dans la même matrice, à savoir une matrice liquide, permet de s'affranchir des effets de matrices et de pouvoir utiliser les résultats de la base de données pour analyser tout type d'échantillon. Ainsi, l'échantillon à analyser est en phase liquide, solide ou gazeuse.

Lors de l'élaboration de la base de données, il faut également veiller à ce qu'aucune raie d'émission n'ait été auto absorbée. En effet, lorsque la concentration d'une solution en élément pur est trop élevée, certaines raies peuvent disparaître, et donc ne pas être mesurées. Cette auto absorption peut altérer la précision de l'analyse quantitative puisque, dans certains cas, on peut avoir besoin des valeurs de toutes les raies pour calculer la concentration d'un des éléments de 1 échantillon à analyser. Ainsi, dans une réalisation de l'invention, les concentrations en élément pur des solutions utilisées pour réaliser la base de données sont inférieures à une valeur prédéterminée, de préférence 0.5% en pourcentage massique, de manière à éviter une auto absorption des raies qui altèrerait la précision de l'analyse quantitative.

Lorsqu'on effectue les mesures sur le spectre de l'échantillon à analyser, il peut se produire que l'appareil de détection utilisé sature. Dans ce cas, toutes les raies qui ont une intensité réelle supérieure au seuil de saturation sont mesurées avec une intensité égale à ce seuil de saturation. Ceci peut altérer l'analyse quantitative, puisqu'on dispose de mesures faussées pour certaines raies. Pour remédier à cet inconvénient, dans une réalisation de l'invention, lorsque l'intensité d'au moins une raie du spectre d'émission de l'échantillon a atteint le seuil de saturation de l'appareil de détection, on reconstitue l'intensité réelle de cette raie en fonction des intensités des autres raies appartenant au même élément et en fonction de coefficients intra élément préalablement calculés à partir de la base de données. Un coefficient intra élément est l'équivalent du coefficient inter éléments, mais pour un élément unique. Il correspond au rapport des intensités de deux raies d'un même élément, représenté par la formule : $coefficient_i(\alpha/\beta) = \dfrac{I_i(\alpha)}{I_i(\beta)}$ , où $I_i(\alpha)$ et $I_i(\beta)$ sont les intensités respectives des raies $\alpha$ et $\beta$ dans l'élément i.

Dans un spectre d'émission d'un échantillon, deux sortes de raies peuvent apparaître : des raies d'émission atomiques, qui correspondent à des atomes dans un état excité, et des raies d'émission ioniques, qui correspondent à des ions dans un état excité. Les raies atomiques sont celles qui présentent la durée de vie la plus importante et la plus grande stabilité dans le temps, ce qui permet de les analyser pendant une durée plus longue. Ainsi, selon une réalisation de l'invention, les raies d'émission de l'échantillon qui sont prises en compte sont préférentiellement les raies d'émission atomiques.

Afin d'effectuer les meilleures analyses possibles, que ce soit pour l'établissement de la base de données ou pour l'analyse de l'échantillon en elle-même, il est nécessaire d'utiliser des appareils de détection couvrant la plus large gamme spectrale possible afin de mesurer le plus grand nombre de raies possibles. A cet effet, dans une réalisation de l'invention, les analyses par spectroscopie d'émission optique sont effectuées à l'aide de spectromètres permettant de balayer en simultané une gamme spectrale allant au moins de 200 à 1000 nm.

Mais pour détecter les raies d'émission présentes dans le spectre de l'échantillon à analyser, on peut également utiliser d'autres types d'appareils de détection. Ces appareils ont, pour la plupart, un comportement qui varie en fonction de la longueur d'onde sur toute la largeur du spectre. Il faut donc, lors de l'analyse, tenir compte de ce comportement. Dans ce but, dans une réalisation de l'invention, on détermine, à l'aide d'appareils tels que des lampes à calibration, une fonction d'appareil K représentant l'influence de l'appareil de détection sur la mesure des intensités des raies en fonction de la longueur d'onde de ces raies. Les lampes à calibration sont des appareils qui envoient une quantité connue de photons en fonction de la longueur d'onde à laquelle ils sont soumis. Ainsi, en comparant les quantités de photons mesurées par l'appareil de détection avec les quantités connues, on peut déterminer l'influence de l'appareil sur les mesures, en fonction des longueurs d'onde. Dans la même réalisation, une fois les mesures effectuées par un appareil donné, on multiplie les intensités des différentes raies d'émission par un facteur de compensation dépendant de cette fonction d'appareil K.

Dans une réalisation, l'appareil de détection utilisé est tel que sa fonction d'appareil K est une constante. Dans ce cas, le facteur de compensation est égal à 1 pour toutes les raies.

Dans le cas où deux appareils ont la même fonction d'appareil K, on peut utiliser directement la base de données, sans tenir compte de cette fonction K, puisque l'influence des appareils sur les mesures est la même, et n'a donc aucun effet sur les calculs de rapport d'intensité ou de coefficient inter-éléments.

Les différentes raies d'émission présentes dans un spectre ont des niveaux d'énergie différents, correspondant à des intensités plus ou moins élevées. Les raies ayant une faible intensité, dites raies peu sensibles, sont plus difficiles à mesurer à une concentration donnée, et pour cela il peut être utile de faire une acquisition sur une durée relativement importante, par exemple 10 secondes, alors que pour les raies ayant une intensité élevée, dites raies sensibles, 1 seconde suffit. Ainsi, dans une réalisation, l'analyse est effectuée par un appareil de détection ayant des durées d'acquisition variables et réglables. Ceci permet de choisir des durées telles qu'on détecte au moins une grande partie des raies d'émission, quelle que soit leur sensibilité. Des différences de durées d'acquisition peuvent également être nécessaires pour déterminer des coefficients intra et inter éléments.

Lorsqu'on utilise une durée d'acquisition importante, les intensités des raies sensibles vont atteindre le seuil de saturation de l'appareil. Ceci n'est pas gênant lorsqu'on mesure les intensités des raies peu sensibles. Par contre, lorsqu'on veut calculer un coefficient intra élément par exemple, il faut veiller à ce que les deux raies prises en compte dans le coefficient ne saturent pas. Dans une réalisation, selon la mesure effectuée, les réglages des durées d'acquisition sont effectués de manière à ce que certaines intensités n'atteignent pas le seuil de saturation de l'appareil de détection.

Une fois la détection effectuée avec des durées d'acquisition variables, il faut bien entendu ramener tous les résultats à une même échelle, afin de pouvoir établir des comparaisons, et de pouvoir utiliser la base de données. A cet effet, dans une réalisation, et notamment dans le cas de l'analyse quantitative, on normalise les intensités des raies d'émission en les divisant par des facteurs dépendant des durées d'acquisition utilisées. Par exemple on peut considérer que la durée de référence est une seconde. Dans ce cas, toutes les mesures effectuées avec une durée d'acquisition égale à P secondes seront divisées par un coefficient de normalisation égal à P.

On a indiqué précédemment qu'une des étapes dans le procédé d'analyse d'échantillon consistait à déterminer, à partir du spectre d'émission, les éléments présents dans l'échantillon à analyser. Pour cela, on utilise la base de données réalisée spécifiquement pour cette analyse. Cette base de données contient, pour un certain nombre d'éléments purs, les longueurs d'onde et intensités de toutes ces raies. Or, afin que la détermination soit la plus exacte possible, il est utile d'avoir une liste exhaustive ou quasi-exhaustive des éléments présents dans l'échantillon. Ainsi, à partir de cette base, la détermination des éléments s'effectue, dans une réalisation de l'invention, en utilisant des critères de détection du type :

- la présence, dans le spectre de l'échantillon à analyser, de plus de X% de ses raies d'émission dans le spectre de l'échantillon à analyser, X valant de préférence 50, et/ou
- la présence, dans le spectre de l'échantillon à analyser, d'au moins M raies parmi les N raies les plus intenses de l'élément pur, M valant de préférence 3, et N valant de préférence entre 5 et 10.

Le critère choisi peut être le même pour tous les éléments d'un échantillon, ou être différent selon les éléments, ou bien encore on peut considérer qu'un élément est présent dans un échantillon lorsque les deux critères cités ici sont vérifiés.

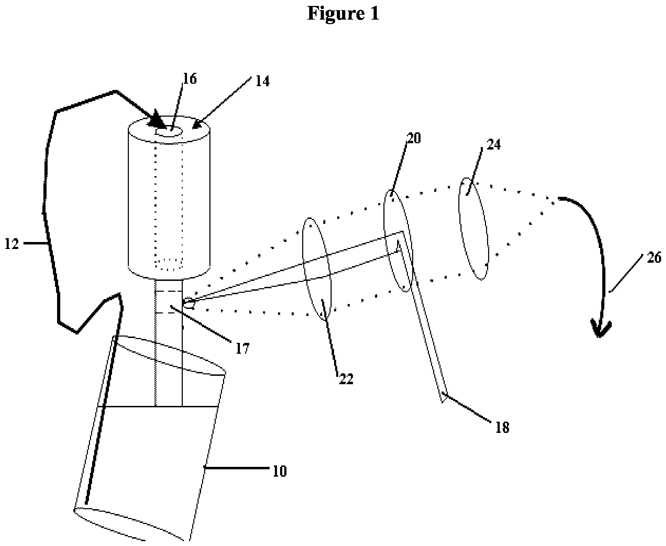

D'autres caractéristiques et avantages de l'invention apparaîtront avec la description non limitative d'un de ses modes de réalisation, cette description étant effectuée à l'aide de la figure 1 représentant un dispositif utilisé pour effectuer une analyse qualitative et quantitative selon un procédé conforme à l'invention.

Ce dispositif sert à effectuer une analyse sur un échantillon se trouvant en phase liquide. Cet échantillon se trouve dans un réservoir 10. Il est amené par pompage péristaltique (12) dans un tube 16. La partie supérieure du tube est entourée d'une gaine 14 contenant de l'azote gazeux servant à confiner le jet comme décrit dans la demande internationale WO 2004/029598. L'échantillon descend dans le tube 16 jusqu'à atteindre une zone d'excitation 17. Cette zone correspond à l'endroit où le tube est atteint par un faisceau laser 18. Ce faisceau laser 18 est réfléchi par un miroir dichroïque en silice fondue 20 et passe à travers une lentille 22 de longueur focale f égale à 30 cm, de manière à atteindre le tube 16 avec une incidence inclinée d'environ 15° par rapport à l'horizontale. Le faisceau laser 18 permet d'exciter l'échantillon se trouvant dans la zone 17, qui va alors se transformer en plasma et émettre un spectre lumineux composé de raies ayant différentes longueurs d'onde. Ce spectre va passer à travers deux lentilles 22 et 24 de longueurs focales respectivement égales à 30 cm et 10 cm. Ce spectre est ensuite transmis, via une fibre optique 26, vers un appareil de détection pour procéder à l'acquisition des mesures.

En fonction des éléments (quantité, sensibilité des raies) à analyser, les solutions sont recyclées par le système de jet pendant des temps variables.

**Revendications**

1. Procédé d'analyse qualitative et quantitative de tout type d'échantillon mono ou multi élémentaire par spectroscopie d'émission optique avec excitation par laser, utilisant une base de données réalisée sur des solutions aqueuses mono-élémentaires ayant toutes la même concentration en élément pur, cette base de données contenant, pour chaque élément, les longueurs d'onde des raies d'émission et leur intensité respective, le procédé comportant les étapes suivantes :

   - on calcule, à partir de la base de données, des coefficients inter éléments entre tous les éléments d'intérêts, c'est-à-dire susceptibles de se retrouver ensemble dans un échantillon, un coefficient inter éléments correspondant au rapport entre les intensités de deux raies de deux éléments différents, un tel coefficient étant représenté par la formule : $coefficient_{(i,j)}(\alpha / \beta) = \dfrac{I_i(\alpha)}{I_j(\beta)}$ , où $I_i(\alpha)$ et $I_j(\beta)$ sont les intensités respectives

   de la raie $\alpha$ dans l'élément i et de la raie $\beta$ dans l'élément j, ces intensités étant issues de la base de données,
   - on effectue une analyse de l'échantillon par spectroscopie d'émission optique pour déterminer au moins une partie des différentes raies d'émission présentes ainsi que leurs intensités,
   - on détermine, à partir du spectre d'émission, les éléments présents dans l'échantillon, et
   - on utilise les coefficients inter éléments et les intensités des raies détectées pour calculer de manière quantitative les concentrations respectives des différents éléments identifiés au préalable lors de l'analyse qualitative, ce calcul consistant à appliquer la formule suivante :

$$c_1 + \sum_i coefficient_{(1,i)}(\alpha_i / \beta_i) * \frac{J_i(\beta_i)}{J_1(\alpha_i)} * c_1 = 100 \text{ ,}$$

   dans laquelle $c_1$ représente la concentration en pourcentage massique d'un élément de l'échantillon choisi comme élément de référence, et les termes de la somme représentent les concentrations des autres éléments de l'échantillon, exprimées en fonction de la concentration $c_1$, des coefficients inter éléments et des intensités $J_i$ mesurées au cours de l'analyse de l'échantillon.

2. Procédé selon la revendication 1 dans lequel l'échantillon à analyser est en phase liquide, solide ou gazeuse.

3. Procédé selon la revendication 1 ou 2 dans lequel les concentrations en élément pur des solutions utilisées pour réaliser la base de données sont inférieures à une valeur prédéterminée, de préférence 0.5% en pourcentage massique, de manière à éviter une auto absorption des raies qui altèrerait la précision de l'analyse quantitative.

4. Procédé selon l'une des revendications précédentes dans lequel, lorsque l'intensité d'au moins une raie du spectre d'émission de l'échantillon a atteint le seuil de saturation de l'appareil de détection, on reconstitue l'intensité réelle de cette raie en fonction des intensités des autres raies appartenant au même élément et en fonction de coefficients intra élément préalablement calculés à partir de la base de données, un coefficient intra élément correspondant au rapport des intensités de deux raies d'un même élément, représenté par la formule :

$coefficient_i(\alpha / \beta) = \dfrac{I_i(\alpha)}{I_i(\beta)}$ , où $I_i(\alpha)$ et $I_i(\beta)$ sont les intensités respectives des raies $\alpha$ et $\beta$ dans l'élément i.

5. Procédé selon l'une des revendications précédentes dans lequel les raies d'émission de l'échantillon prises en compte sont les raies d'émission atomiques.

**6.** Procédé selon l'une des revendications précédentes dans lequel les analyses par spectroscopie d'émission optique sont effectuées à l'aide de spectromètres permettant de balayer en simultané une gamme spectrale allant au moins de 200 à 1000 nm.

**7.** Procédé selon l'une des revendications précédentes dans lequel on détermine, à l'aide d'appareils tels que des lampes à calibration, une fonction d'appareil K représentant l'influence de l'appareil de détection sur la mesure des intensités des raies en fonction de la longueur d'onde de ces raies, et dans lequel on multiplie les intensités des différentes raies d'émission par un facteur de compensation dépendant de cette fonction d'appareil K.

**8.** Procédé selon la revendication 7 dans lequel, la fonction d'appareil K étant une constante, le facteur de compensation est égal à 1 pour toutes les raies.

**9.** Procédé selon l'une des revendications précédentes dans lequel l'analyse est effectuée par un appareil de détection ayant des durées d'acquisition variables et réglables, de manière à pouvoir choisir des durées telles qu'on détecte au moins une grande partie des raies d'émission, quelle que soit leur sensibilité.

**10.** Procédé selon la revendication 9 dans lequel les réglages des durées d'acquisition sont effectués de manière à ce que certaines intensités des raies d'émission n'atteignent pas le seuil de saturation de l'appareil de détection.

**11.** Procédé selon la revendication 9 ou 10 dans lequel, pour effectuer l'analyse quantitative, on normalise les intensités des raies d'émission en les divisant par des facteurs dépendant des durées d'acquisition utilisées.

**12.** Procédé selon l'une des revendications précédentes dans lequel, pour déterminer les éléments présents dans l'échantillon à analyser à partir du spectre d'émission, on utilise des critères de détection du type :

- la présence, dans le spectre de l'échantillon à analyser, de plus de X% de ses raies d'émission dans le spectre de l'échantillon à analyser, X valant de préférence 50, et/ou
- la présence, dans le spectre de l'échantillon à analyser, d'au moins M raies parmi les N raies les plus intenses de l'élément pur, M valant de préférence 3, et N valant de préférence entre 5 et 10.

**Patentansprüche**

**1.** Verfahren zur qualitativen und quantitativen Analyse jeder Art von mono- oder multielementaren Probe über optische Emissionsspektroskopie mit Anregung über Laser, unter Verwendung einer Datenbank, ausgeführt an monoelementaren wässrigen Lösungen, welche alle die selbe Konzentration an Reinelement aufweisen, wobei diese Datenbank für jedes Element die Wellenlängen der Emissionslinien und ihre jeweilige Intensität enthält, wobei das Verfahren die folgenden Schritte umfasst:

- anhand der Datenbank werden Inter-Element-Koeffizienten zwischen allen den Elementen, die von Interesse sind, das heißt die sich gemeinsam in einer Probe wiederfinden können, berechnet, wobei ein Inter-Element-Koeffizient dem Verhältnis zwischen den Intensitäten zweier Linien zweier verschiedener Elemente entspricht, wobei ein solcher Koeffizient wiedergegeben wird von der Formel:

$$coefficient_{(i,j)}(\alpha/\beta) = \frac{I_i(\alpha)}{I_j(\beta)},$$

worin $I_i(\alpha)$ und $I_j(\beta)$ die jeweiligen Intensitäten der Linie $\alpha$ im Element i und der Linie $\beta$ im Element j sind, wobei diese Intensitäten aus der Datenbank stammen,
- es wird eine Analyse der Probe über optische Emissionsspektroskopie vorgenommen, um mindestens einen Teil der verschiedenen vorhandenen Emissionslinien, sowie deren Intensitäten zu bestimmen,
- anhand des Emissionsspektrums werden die in der Probe vorhandenen Elemente bestimmt, und
- die Inter-Element-Koeffizienten und die Intensitäten der Linien, die nachgewiesen wurden, werden verwendet, um in quantitativer Weise die jeweiligen Konzentrationen der verschiedenen Elemente zu berechnen, die zuvor bei der qualitativen Analyse identifiziert wurden, wobei diese Berechnung darin besteht, die folgende Formel anzuwenden:

$$c_1 + \sum_i coefficient_{(1,i)}(\alpha_i / \beta_i) * \frac{J_i(\beta_i)}{J_1(\alpha_i)} * c_1 = 100$$

wobei $c_1$ die Konzentration eines als Bezugselement ausgewählten Elements der Probe in Masseprozentsatz wiedergibt, und die Terme der Summe die Konzentrationen der anderen Elemente der Probe in Abhängigkeit von der Konzentration $c_1$, den Inter-Element-Koeffizienten und den im Lauf der Analyse der Probe gemessenen Intensitäten $J_i$ ausgedrückt wiedergeben.

2. Verfahren nach Anspruch 1, wobei die zu analysierende Probe in Flüssig-, Fest- oder Gasphase vorliegt.

3. Verfahren nach Anspruch 1 oder 2, wobei die Konzentrationen an Reinelement der Lösungen, die verwendet werden, um die Datenbank auszuführen, kleiner sind als ein vorbestimmter Wert, vorzugsweise 0,5 % an Masseprozentsatz, um eine Selbstabsorption der Linien zu verhindern, die die Genauigkeit der quantitativen Analyse verändern würde.

4. Verfahren nach einem der vorstehenden Ansprüche, wobei wenn die Intensität von mindestens einer Linie des Emissionsspektrums der Probe die Sättigungsschwelle der Nachweisvorrichtung erreicht hat, die reale Intensität dieser Linie in Abhängigkeit von den Intensitäten der anderen, zum selben Element gehörenden Linien, und in Abhängigkeit von zuvor anhand der Datenbank berechneten Intra-Element-Koeffizienten rekonstruiert wird, wobei ein Intra-Element-Koeffizient dem Verhältnis der Intensitäten zweier Linien ein und desselben Element entspricht, wiedergegeben durch die Formel: $coefficient_i(\alpha / \beta) = \frac{I_i(\alpha)}{I_i(\beta)}$, worin $I_i(\alpha)$ und $I_j(\beta)$ die jeweiligen Intensitäten der Linien $\alpha$ und $\beta$ im Element i sind.

5. Verfahren nach einem der vorstehenden Ansprüche, wobei die Emissionslinien der Probe, die berücksichtigt werden, die atomaren Emissionslinien sind.

6. Verfahren nach einem der vorstehenden Ansprüche, wobei die Analysen über optische Emissionsspektroskopie mithilfe von Spektrometern vorgenommen werden, die es ermöglichen, einen Spektralbereich, der mindestens von 200 bis 1000 nm reicht, gleichzeitig abzutasten.

7. Verfahren nach einem der vorstehenden Ansprüche, wobei mithilfe von Vorrichtungen wie etwa Kalibrierungslampen eine Vorrichtungsfunktion K bestimmt wird, die den Einfluss der Nachweisvorrichtung auf die Messung der Intensitäten der Linien in Abhängigkeit von der Wellenlänge dieser Linien wiedergibt, und wobei die Intensitäten der verschiedenen Emissionslinien mit einem Kompensationsfaktor multipliziert werden, der von dieser Vorrichtungsfunktion K abhängt.

8. Verfahren nach Anspruch 7, wobei wenn die Vorrichtungsfunktion K eine Konstante ist, der Kompensationsfaktor für alle die Linien gleich 1 ist.

9. Verfahren nach einem der vorstehenden Ansprüche, wobei die Analyse über eine Nachweisvorrichtung vorgenommen wird, die variable und einstellbare Erfassungsdauern aufweist, um solche Dauern auswählen zu können, dass ungeachtet ihrer Empfindlichkeit mindestens ein großer Teil der Emissionslinien nachgewiesen wird.

10. Verfahren nach Anspruch 9, wobei die Einstellungen der Erfassungsdauern so vorgenommen werden, dass gewisse Intensitäten der Emissionslinien die Sättigungsschwelle der Nachweisvorrichtung nicht erreichen.

11. Verfahren nach Anspruch 9 oder 10, wobei um die quantitative Analyse vorzunehmen, die Intensitäten der Emissionslinien durch Dividieren derselben durch Faktoren normalisiert werden, welche von den verwendeten Erfassungsdauern abhängen.

12. Verfahren nach einem der vorstehenden Ansprüche, wobei um die Elemente, die in der zu analysierenden Probe vorhanden sind, anhand des Emissionsspektrums zu bestimmen, Nachweiskriterien verwendet werden vom Typ:

- des Vorhandenseins, im Spektrum der zu analysierenden Probe, von mehr als X % ihrer Emissionslinien im Spektrum der zu analysierenden Probe, wobei X vorzugsweise 50 beträgt, und/oder
- des Vorhandenseins, im Spektrum der zu analysierenden Probe, von mindestens M Linien aus den N intensivsten Linien des Reinelements, wobei M vorzugsweise 3 beträgt, und N vorzugsweise zwischen 5 und 10 beträgt.

**Claims**

1.  Method for the qualitative and quantitative analysis of any type of single- or multi-element sample by optical emission spectroscopy with laser excitation, using a database produced on single-element aqueous solutions all having the same concentration of pure element, this database containing, for each element, the wavelengths of the emission lines and their respective intensity, the method comprising the following steps:

    - from the database, inter-element coefficients between all the elements of interest are calculated, that is to say those liable to be found together in a sample, an inter-element coefficient corresponding to the ratio between the intensities of two lines of two different elements, such a coefficient being represented by the formula:

    $$coefficient_{(i,j)}(\alpha / \beta) = \frac{I_i(\alpha)}{I_j(\beta)},$$

    where $I_i(\alpha)$ and $I_j(\beta)$ are the respective intensities of the line $\alpha$ in the element i and of the line $\beta$ in the element j, these intensities coming from the database,
    - an analysis of the sample is carried out by optical emission spectroscopy in order to determine at least some of the various emission lines present as well as the intensities thereof,
    - from the emission spectrum, the elements present in the sample are determined,
    - the inter-element coefficients and the intensities of the lines detected are used to calculate quantitatively the respective concentrations of the various elements identified previously during the qualitative analysis, this calculation consisting of applying the following formula:

    $$c_1 + \sum_i coefficient_{(1,i)}(\alpha_i / \beta_i) * \frac{J_i(\beta_i)}{J_1(\alpha_i)} * c_1 = 100,$$

    in which $c_1$ represents the concentration in percentage by mass of an element in the sample chosen as the reference element, and the terms of the sum represent the concentrations of the other elements in the sample, expressed according to the concentration $c_1$, inter-element coefficients and intensities $J_i$ measured during the analysis of the sample.

2.  Method according to claim 1, wherein the sample to be analysed is in the liquid, solid or gaseous phase.

3.  Method according to claim 1 or claim 2, wherein the concentrations of pure element in the solutions used for producing the database are below a predetermined value, preferably 0.5% in percentage by mass, so as to avoid an auto-absorption of the lines that would impair the precision of the quantitative analysis.

4.  Method according to any of the preceding claims, wherein, when the intensity of at least one line of the emission spectrum of the sample has reached the saturation threshold of the detection apparatus, the actual intensity of this line is reconstituted according to the intensities of the other lines belonging to the same element and according to intra-element coefficients previously calculated from the data base, and an intra-element coefficient corresponding to the ratio of the intensities of two lines of the same element, represented by the formula: $coefficient_i(\alpha / \beta) = \frac{I_i(\alpha)}{I_i(\beta)},$

    where $I_i(\alpha)$ and $I_i(\beta)$ are the respective intensities of the lines $\alpha$ and $\beta$ in the element i.

5.  Method according to any of the preceding claims, wherein the emission lines of the sample taken into account are the atomic emission lines.

6. Method according to any of the preceding claims, wherein the analyses by optical emission spectroscopy are carried out by means of spectrometers making it possible to simultaneously scan a spectral range at least ranging from 200 to 1000 nm.

7. Method according to any of the preceding claims, wherein, by means of apparatus such as calibration lamps, an apparatus function K representing the influence of the detection apparatus on the measurement of the intensities of the lines is determined according to the wavelength of the lines, and wherein the intensities of the various emission lines are multiplied by a compensation factor dependent on this apparatus function K.

8. Method according to claim 7, wherein, the apparatus function K being a constant, the compensation factor is equal to 1 for all the lines.

9. Method according to any of the preceding claims, wherein the analysis is carried by a detection apparatus having variable and adjustable acquisition times, so as to be able to choose times such that at least a major part of the emission lines are detected, whatever the sensitivity thereof.

10. Method according to claim 9, wherein the adjustments of the acquisition times are made so that some intensities of the emission lines do not reach the saturation threshold of the detection apparatus.

11. Method according to claim 9 or claim 10, wherein, in order to carry out the quantitative analysis, the intensities of the emission lines are standardised by dividing them by the factors dependent on the acquisition times used.

12. Method according to any of the preceding claims, wherein, in order to determine the elements present in the sample to be analysed from the emission spectrum, detection criteria are used of the following type:

- the presence, in the spectrum of the sample to be analysed, of more than X% of its emission lines in the spectrum of the sample to be analysed, X preferably being equal to 50 and/or
- the presence, in the spectrum of the sample to be analysed, of at least M lines among the most intense N lines of the pure element, M preferably being equal to 3, and N preferably being between 5 and 10.

# Figure 1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6753957 B1
- US 2005024638 A1

- WO 2004029598 A

**Littérature non-brevet citée dans la description**

- **P.FICHET et al.** Analysis by laser-induced breakdown spectroscopy of complex solids, liquids, and powders with an echelle spectrometer. *APPLIED OPTICS,* 20 Octobre 2003, vol. 42 (30), 6029-6035